# EUROPÄISCHE PATENTANMELDUNG

(11) **EP 0 887 402 A1**
(43) Veröffentlichungstag der Anmeldung: **30.12.1998**
(21) Anmeldenummer: 98111335.0
(22) Anmeldetag: 19.06.1998
(51) Int. Cl.: C10M 175/04, B01D 17/02

(54) **Verfahren zum Abscheiden von Verunreinigungen aus Kühlschmierstoffen**

(30) Priorität: 28.06.1997 DE 19727618
(71) Anmelder: FILTERWERK MANN & HUMMEL GMBH, 71631 Ludwigsburg (DE)
(72) Erfinder: Bühl, Karl Heinz, 52066 Aachen (DE)
(74) Vertreter: Voth, Gerhard, Dipl.-Ing.

(57) **Zusammenfassung**

Es wird ein Verfahren zum Abscheiden von Verunreinigungen aus Kühlschmierstoffen, insbesondere Öl oder Ölemulsionen vorgeschlagen. Bei diesem Verfahren wird zunächst der Kühlschmierstoff zur Erhöhung der Viskosität erwärmt. Anschließend wird er in einer Zentrifuge (19) zentrifugiert. Der gereinigte Kühlschmierstoff gelangt zu einer Kühleinrichtung (13), in welcher dieser wieder auf Normaltemperatur bzw. auf die geforderte Viskosität eingestellt wird.

## Beschreibung

Die Erfindung betrifft ein Verfahren zum Abscheiden von Verunreinigungen aus Kühlschmierstoffen.

In der spanenden Industrie wird, wenn Trockenbearbeitung nicht möglich ist, zum Schmieren und Kühlen der Werkzeuge Öl bzw. ein Öl-Wassergemisch ( Emulsion ) eingesetzt. Dieser Kühlschmierstoff dient ebenfalls zum Abtransport der anfallenden Späne in eine nachfolgende Filteranlage. Hier werden Späne und Kühlschmierstoff weitgehend getrennt, die Späne ausgetragen, der weitgehend gereinigte Kühlschmierstoff dem Arbeitsprozeß an der Werkzeugschneide wieder zugeführt.

Die ständig zu erhöhende Produktivität führt durch weiter verbesserte Werkzeugsysteme zu immer höheren Schnittgeschwindigkeiten, höheren Werkzeugstandzeiten und auch zu geänderten Späneformen. Die höhere Leistung wird ebenfalls nur dann erreicht, wenn Öl als Kühlschmiermittel eingesetzt wird mit der Tendenz zu Öl mit höherer Viskosität.

Die Anforderungen an die Filteranlage wachsen mit diesen Vorgaben, das heißt die erforderliche Filterfeinheit muß immer besser werden und der Restschmutzgehalt im Öl auf der Sauberseite muß immer weiter abgesenkt werden. Hierzu gibt es Filteranlagen die diese Aufgaben zwar lösen, sie benutzen jedoch zur Filtrierung ein Filterhilfsmittel das entsprechende Anschaffungs-und Entsorgungskosten verursacht.

Weiterhin gilt besonders bei der Neubeschaffung der Grundsatz der Abfallvermeidung vor Abfallbeseitigung.

Bei der Materialbearbeitung von Grauguß, Aluminium und Magnesium reichert sich jedoch bei Öl als Kühlschmiermittel der Feinschmutzanteil, insbesondere Partikel von einer Größe unter ca. 15 µm ständig an.

Bei Grauguß ist es überwiegend der Graphitanteil, bei Aluminium und Magnesium Feinstspäne.

Wenn keine Anschwemmfilter als Hauptstromfilter eingesetzt werden, führt der ständig wachsende Feinschmutzanteil im Kühlschmiermittel zum Zusetzen von Versorgungsleitungen, Verkleben von Gleitbahnen und Maschineninnenwänden mit zusätzlicher Brandgefahr bei Magnesiumbearbeitung, außerdem zum Versagen von innen gekühlten Werkzeugen.

Bestimmte Filterverfahren leiden auch an der Verschlammung durch Feinschmutz und erfordern einen immer höheren Wartungsaufwand.

In der Praxis versucht man durch Einsatz von Zusatzfiltern in einem Sekundärkreislauf diese Verschlammung zumindest auf ein vermeintlich vertägliches Maß zu reduzieren.

Es ist aus der DE 42 05 884 ein Verfahren zum Trennen von entwässertem Altöl bekannt, wobei das Altöl in mittelschwere Mineralöle, in schwere Mineralöle und in Feststoffe getrennt werden soll. Hierzu wird das Altöl in einen Erhitzungskreislauf geführt, ein Teil des Altöls verdampft und wird in einem Zweiphasendekanter in Feststoffe und in eine zentrifugierte, saubere Schwerölphase getrennt. Ein Nachteil des Verfahrens ist der hohe Energieaufwand.

Bei der Reinigung von Kühlschmierstoffen die ständig erfolgt, ist ein solches Verfahren nicht wirtschaftlich.

Es ist ferner aus der DE 43 43 609 ein Verfahren zum Aufbereiten von Kühlschmierstoffen bekannt, wobei die Kühlschmierstoffe erwärmt, anschließend dekantiert und der wiedergewonnene Kühlschmierstoff abgezogen wird. Durch Separieren wird das wiederverwertbare Öl aufbereitet.

Auch dieses Verfahren zeichnet sich durch einen hohen Energieaufwand aus und ist, nur dort geeignet, wo eine geringe Menge an Kühlschmierstoffen gereinigt werden muß.

Der Erfindung liegt die Aufgabe zugrunde ein Verfahren zu schaffen, das geeignet ist einen hohen Durchsatz an Kühlschmierstoffen zu bewältigen, das heißt große Mengen an Kühlschmierstoffen unter geringem Energieeinsatz zu filtern.

Diese Aufgabe wird durch die Merkmale des Hauptanspruchs gelöst.

Der wesentliche Vorteil der Erfindung liegt darin, daß das mit Feinschmutz beladene Öl bzw. der Kühlschmierstoff zunächst erwärmt, danach zentrifugiert und anschließend wieder abgekühlt wird. Das kombinierte Erwärmen und Kühlen kann durch einen einfachen Wärmepumpenprozeß aufgrund der Kopplung von Erwärmen und Kühlen energiesparend gelöst werden. Die entsprechend gewählte Zentrifuge kann den Feinschmutz in stichfester Form auswerfen. Die Viskosität des Kühlschmierstoffs kann durch das Erwärmen bis unter 10 cSt abgesenkt werden.

Gemäß einer Ausgestaltung der Erfindung erfolgt das Zentrifugieren des Kühlschmierstoffs im Nebenstrom. Im Hauptstrom können die Grobpartikel mit einem Filterelement oder einem Anschwemmfilter separiert werden.

Es besteht auch die Möglichkeit, durch entsprechende Dimensionierung einer Einrichtung zur Durchführung des Verfahrens den Kühlschmierstoff im Hauptstrom zu zentrifugieren. Hierbei werden sowohl die groben als auch die Feinpartikel in der Zentrifuge abgeschieden.
Wie bereits erwähnt, läßt sich das Erwärmen und Kühlen des Kühlschmierstoffs über einen Wärmepumpenprozeß energiesparend bewerkstelligen. Selbstverständlich besteht auch die Möglichkeit, über konventionelle Temperiereinrichtungen den Kühlschmierstoff zu erwärmen bzw. abzukühlen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand eines Ausführungsbeispiels näher erläutert.

Es zeigt:
- Figur 1: eine schematische Darstellung einer Einrichtung zur Durchführung des Verfahrens zum Abscheiden von Verunreinigungen aus Kühlschmierstoffen.
- Figur 2: die in Figur 1 gezeigte Einrichtung im Nebenstrom einer Filteranlage.

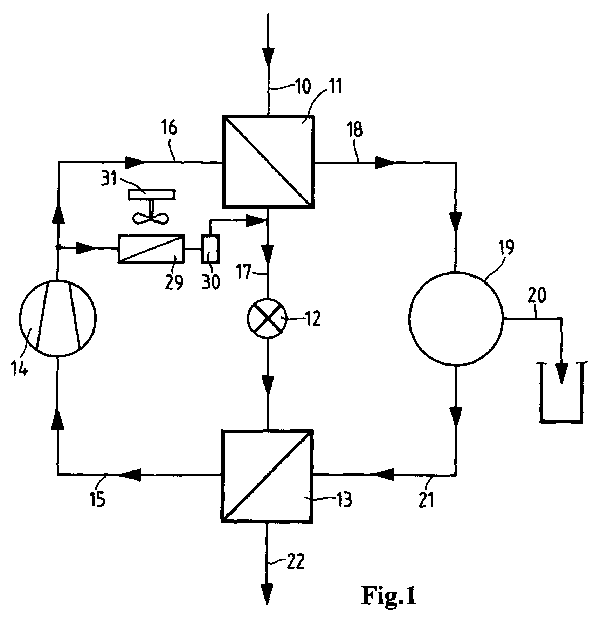

Der Einrichtung gemäß Figur 1 wird über die Leitung 10 verunreinigter Kühlschmierstoff, insbesondere verunreinigtes Schmutzöl zugeführt. Das Schmutzöl gelangt zu einem Kondensator 11, dieser Kondensator 11 ist Teil einer Wärmepumpe die ferner ein Expansionsventil 12, einen Verdampfer 13, einen Kompressor 14, sowie Leitungen 15, 16, 17 für das Wärmemittel aufweist. An Leitung 16 ist zwischen Kompressor 14 und Kondensator 11 ein Kühler vorgesehen, dieser Kühler 29 weist ein Gebläse 31 auf und kühlt einen Teilstrom des Wärmemittels. Die Menge des Teilstroms wird über das Ventil 30 gesteuert. Im Kondensator 11 wird das Schmutzöl erwärmt und gelangt über die Leitung 18 zu einer Zentrifuge 19. Hier wird je nach Bauart der Zentrifuge, Feinschmutz al stichfester Schlamm oder hochkonzentrierter Ölschlamm ausgetragen. Der Austrag erfolgt über den Schmutzaustrag 20. Das gereinigte Öl gelangt als Sauberöl über die Leitung 21 zu dem Verdampfer 13, wird dort gekühlt und verläßt über die Leitung 22 die Einrichtung und kann von dort aus der Werkzeugmaschine bzw. der Bearbeitungsmaschine als Kühlschmiermittel zugeführt werden.

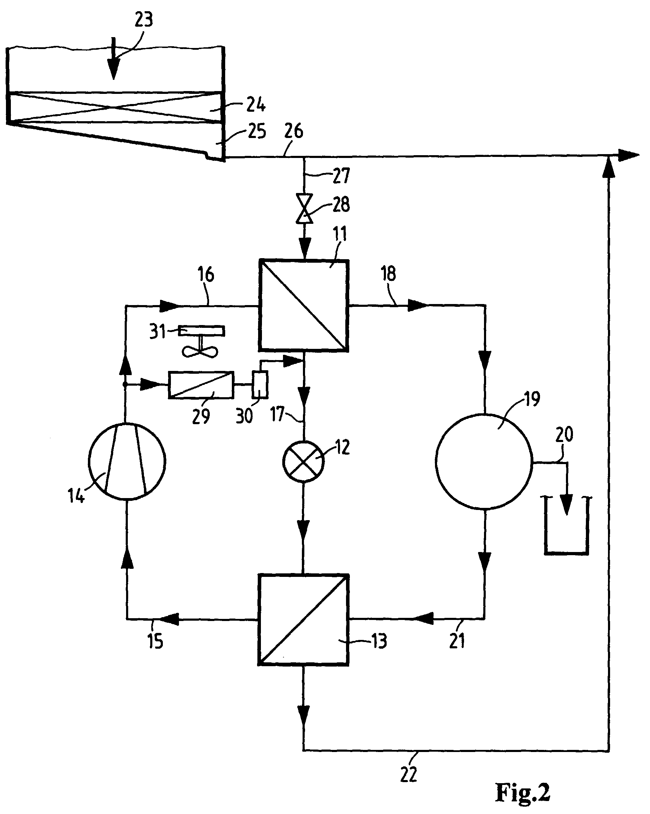

Figur 2 zeigt eine Einrichtung gemäß Figur 1 in einem Nebenstromkreislauf, gleiche Teile sind mit gleichen Bezugszeichen versehen. Über die Leitung 23 gelangt Schmutzöl zu einer Filtereinrichtung 24. In dieser Filtereinrichtung werden die Grobpartikel zurückgehalten, das mit Feinpartikeln noch beladene Öl sammelt sich in der Auffangwanne 25 und strömt von dort in die Leitung 26. Ein Großteil des gereinigten Öls wird unmittelbar den Bearbeitungsmaschinen zugeführt. Ein Nebenstrom gelangt über die Leitung 27 und das Ventil 28 zu der in Figur 1 bereits beschriebenen Einrichtung, wird dort erwärmt, zentrifugiert und anschließend wieder abgekühlt, verläßt über die Leitung 22 als Sauberöl den Prozeß und wird der grobgereinigten Bearbeitungsflüssigkeit zugemischt. Es besteht auch die Möglichkeit, das zentrifugierte Öl gezielt dort als Bearbeitungsflüssigkeit einzusetzen, wo eine hohe Reinheit gefordert wird, während das grobgereinigte Öl entsprechend seinem Reinigungsgrad Verwendung findet. Grundsätzlich wird das mit Schmutz bzw. Verunreinigungen belastete Öl wieder über die Leitung 23 der Filtereinrichtung 24 zugeführt.

## Patentansprüche

1. Verfahren zum Abscheiden von Verunreinigungen aus Kühlschmierstoffen, insbesondere Öl-oder Ölemulsionen, wobei zunächst der Kühlschmierstoff zur Erhöhung der Viskosität erwärmt anschließend einer Zentrifuge (19) zugeführt wird und danach der gereinigte Kühlschmierstoff abgekühlt wird.

2. Verfahren nach Anspruch 1, dadurch gekennzeichnet, daß das Zentrifugieren des Kühlschmierstoffs im Nebenstrom erfolgt.

3. Verfahren nach Anspruch 2, dadurch gekennzeichnet, daß eine Grobfiltrierung des Kühlschmierstoffs im Hauptstroms mit einem Filterelement (24) erfolgt.

4. Verfahren nach Anspruch 1, dadurch gekennzeichnet, daß das Zentrifugieren des Kühlschmierstoffs im Hauptstrom erfolgt.

5. Verfahren nach einem der vorherigen Ansprüche, dadurch gekennzeichnet, daß das Erwärmen und Kühlen des Kühlschmierstoffs durch einen Wärmepumpenprozeß erfolgt.

6. Einrichtung zur Durchführung des Verfahrens nach Anspruch 1, wobei eine Wärmepumpe mit einem Kondensator (11), einem Verdampfer (13) und einem Kompressor (14) vorgesehen ist und der mit Verunreinigungen belastete Kühlschmierstoff dem Kondensator (11) zugeführt, dort erwärmt, anschließend über eine Zentrifuge (19) gereinigt und von dort dem Verdampfer (13) zur Abkühlung zugeführt wird.
